**Europäisches Patentamt**

**European Patent Office**

**Office européen des brevets**

(19)

(11) Numéro de publication: **0 219 422 B1**

(12) **FASCICULE DE BREVET EUROPEEN**

(45) Date de publication du fascicule du brevet:
26.04.89

(51) Int. Cl.⁴: **D06F 37/30**

(21) Numéro de dépôt: **86402195.1**

(22) Date de dépôt: **03.10.86**

(54) **Lave-linge ou sèche-linge à détection de l'état de fermeture du tambour à linge.**

(30) Priorité: **04.10.85 FR 8514770**

(43) Date de publication de la demande:
**22.04.87 Bulletin 87/17**

(45) Mention de la délivrance du brevet:
**26.04.89 Bulletin 89/17**

(84) Etats contractants désignés:
**AT BE CH DE ES FR GB IT LI LU NL SE**

(56) Documents cités:
**EP-A- 0 090 716**
**FR-A- 2 307 075**
**FR-A- 2 358 086**
**GB-A- 256 859**
**GB-A- 1 598 923**

(73) Titulaire: **CIAPEM, 137, rue de Gerland, F-69007 - Lyon(FR)**

(72) Inventeur: **Garofalo, François, THOMSON-CSF SCPI 19, avenue de Messine, F-75008 Paris(FR)**
Inventeur: **Querol, Marc, THOMSON-CSF SCPI 19, avenue de Messine, F-75008 Paris(FR)**
Inventeur: **Delhomme, Bernard, THOMSON-CSF SCPI 19, avenue de Messine, F-75008 Paris(FR)**

(74) Mandataire: **Grynwaid, Albert et al, THOMSON-CSF SCPI, F-92045 PARIS LA DEFENSE CEDEX 67(FR)**

## Description

L'invention est relative à un lave-linge ou un sèche-linge à tambour tournant entraîné par un moteur électrique.

Dans un lave-linge ou dans un sèche-linge le linge est disposé dans un tambour tournant entraîné en rotation par un moteur électrique.

Le tambour d'un lave-linge ou d'un sèche-linge présente une paroi cylindrique comportant l'ouverture de porte. Cette porte peut être de deux types: à glissière ou à battant(s). Dans le premier type la porte coulisse, pour l'ouverture et la fermeture, pratiquement contre le reste de la surface cylindrique du tambour. Dans le second type l'articulation de chaque battant est selon une génératrice de la surface cylindrique constituant le tambour. Le (ou les) battant(s) est habituellement rappelé en position d'ouverture par ressort: lorsque la porte est ouverte le (ou les) battant(s) est automatiquement éloigné de l'ouverture.

Les dommages causés à la machine ou au linge peuvent être importants si l'utilisateur met en route le lave-linge ou le sèche-linge après avoir omis de fermer la porte du tambour.

Pour limiter ce risque, dans le machines à tambour munies de portes à battants on prévoit des butées pour les battants ouverts. Mais cette disposition est insuffisante car le moteur reste sous tension et fait patiner la courroie qui relie son arbre à celui du tambour contre les poulies correspondantes; de plus le moteur est sollicité de façon prohibitive et, lorsqu'on a affaire à un lave-linge, pendant les phases de lavage ou rinçage le moteur tourne alternativement dans un sens et dans un autre, ce qui provoque des chocs périodiques du ou des battant contre la butée, ce qui constitue encore un autre risque de détérioration.

L'invention remédie à ces inconvénients.

Elle est caractérisée en ce que la régulation est commandée en boucle ouverte pendant une durée prédéterminée, de l'ordre de quelques secondes, et cette régulation fonctionne en boucle fermée à l'issue de la durée prédéterminée si, à cet instant, la vitesse de rotation du tambour est supérieure à un seuil prédéterminé, l'alimentation en énergie électrique du moteur d'entraînement du tambour étant interrompue au bout de la durée prédéterminée si, à cet instant, la vitesse de rotation du tambour est inférieure à un seuil déterminé, par exemple de l'ordre de 30 tours par minute.

Avec une telle machine on évite les chocs brutaux si la porte du tambour est ouverte.

Il est certes déjà connu (FR 2 307 075 et 2 358 086) de faire démarrer progressivement le moteur d'entraînement du tambour d'un lave-linge, mais la technique antérieure, qui ne vise pas à résoudre le même problème, à savoir éviter les chocs brutaux si la porte du tambour est ouverte, ne fournit pas de commande du moteur d'entraînement du tambour qui soit appropriée à la solution de ce problème.

L'augmentation progressive de vitesse est par exemple effectuée pendant 2 à 3 secondes, de préférence 2,5 secondes.

Le moteur est par exemple du type universel, c'est-à-dire un moteur continu du type série alimenté en alternatif par l'intermédiaire d'un interrupteur commandé, tel qu'un triac, dont l'instant d'alumage (conduction) à chaque période du signal alternatif d'alimentation est déterminé par une commande d'angle de phase à microprocesseur; cet angle de phase est fonction du signal d'erreur, c'est-à-dire de la différence entre la vitesse de consigne, en mémoire du microprocesseur, et la vitesse mesurée, habituellement par une génératrice tachymétrique. Dans le cas d'une telle machine à laver ou sécher le linge l'invention n'implique pratiquement aucun coût supplémentaire.

Dans le cas où le moteur est alimenté par une commande à angle de phase l'augmentation progressive susmentionnée est une augmentation progressive de l'angle de phase au cours de chaque période du signal alternatif.

Si, au cours de la phase de démarrage avec augmentation progressive de la vitesse, cette dernière dépasse une limite prédéterminée l'alimentation en boucle ouverte est interrompue et est, sans attendre lesdites quelques secondes, remplacée par l'alimentation habituelle en boucle fermée. On évite ainsi que le tambour tourne à une vitesse trop élevée lorsqu'il ne contient qu'une faible charge de linge et lorsque la porte est bien fermée. A titre d'exemple, si la vitesse de rotation habituelle du tambour lors du lavage est de 50 tours par minute, la vitesse limite mentionnée ci-dessus est de l'ordre de 80 tours par minute.

L'invention n'est pas limitée à une machine à tambour à porte à battant. Elle s'applique aussi à une machine à tambour à porte à glissière. Dans ce cas, si la porte est ouverte lors du démarrage de la machine, le linge forme lui-même un obstacle entre le tambour et la cuve et provoque l'arrêt du tambour.

D'autres caractéristiques et avantages de l'invention apparaîtront avec la description de certains de ses modes de réalisation, celle-ci étant effectuée en se référant aux dessins ci-annexés sur lesquels:

— la figure 1 montre un moteur d'entraînement d'un tambour de lave-linge ou sèche-linge et son alimentation,

— les figures 2 à 4 sont des schémas de cuve et tambour de lave-linge, et

— les figures 5 à 8 sont des diagrammes illustrant certaines dispositions d'un exemple de réalisation de l'invention.

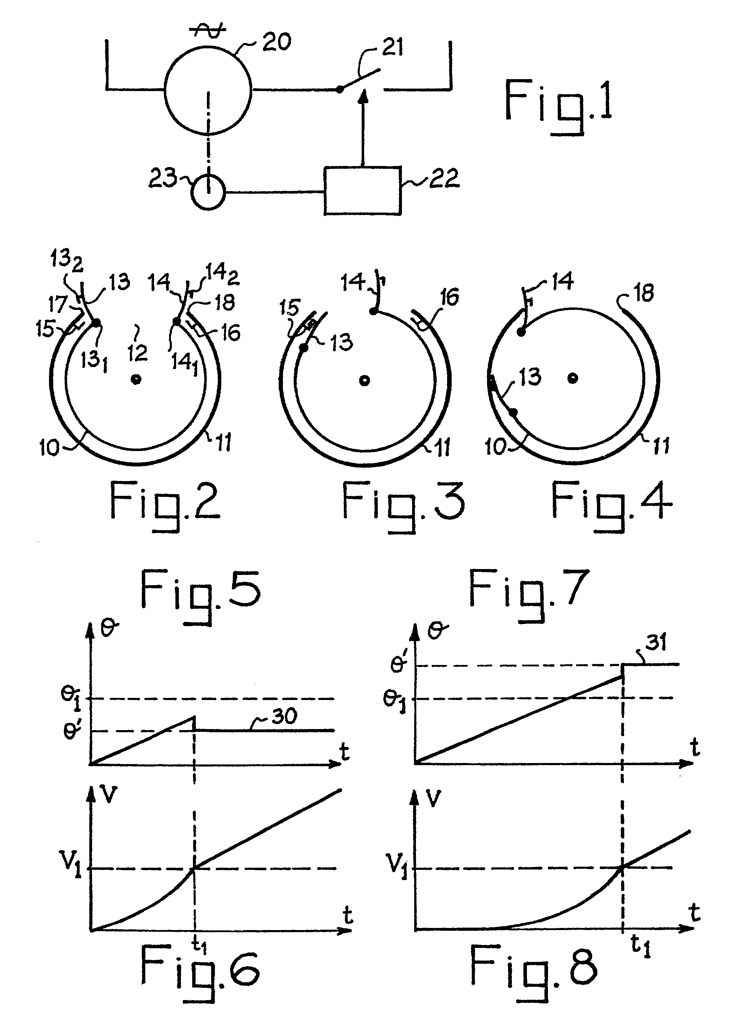

Le mode de réalisation qu'on va décrire en relation avec les figures concerne un lave-linge à tambour cylindrique perforé 10 (figures 2 à 4) destiné à contenir le linge (non montré) et tournant à l'intérieur d'une cuve 11. Le tambour 10 comprend une ouverture 12, pour l'introduction et l'évacuation du linge, qui est fermée par une porte à deux battants 13 et 14.

Les articulations des deux battants aux bords de l'ouverture 12 s'effectuent selon deux génératrices $13_1$, $14_1$ de la surface cylindrique du tambour 10. Des ressorts (non montrés) amènent automatiquement les battants 13 et 14 dans la position représentée sur la figure 2 lorsque la porte est ouverte. Dans cette position ces battants 13 et 14 ont une direction pratiquement radiale et constituent un entonnoir permettant l'introduction et l'extraction du linge.

Dans l'exemple représenté sur les figures 2 et 3 des butées 15 et 16 sont prévues à l'intérieur de la cuve 11, au voisinage des bords 17 et 18 de l'ouverture supérieure de cuve. Lorsque la porte à battants 13, 14 n'est pas fermée lors de la mise en route du lave-linge, cette butée coopère avec des butées correspondantes $13_2$, $14_2$ que présentent les surfaces extérieures des battants 13 et 14 pour empêcher la rotation du tambour 10. Le plus souvent les butées ou saillies $13_2$, $14_2$ sont constituées par les moyens de verrouillage assurant la fermeture de la porte 13, 14.

Dans l'exemple de la figure 4 la cuve ne présente pas de butée 15, 16. Toutefois les bords 17 et 18 de l'ouverture supérieure de la cuve 11 jouent le rôle de butées. Ainsi, comme on le voit sur la figure 4, la surface interne du battant 14 s'appuie contre l'arête 17 de l'ouverture de cuve 11. L'inconvénient de cette réalisation, par rapport à celle représentée sur les figures 2 et 3 est que le tambour 10 tourne d'un angle plus important avant de s'arrêter.

Le tambour 10 est entraîné en rotation par un moteur universel 20 (figure 1) en série avec un interrupteur statique 21, en général un triac, cet ensemble en série du moteur 20 et de l'interrupteur commandé 21 étant alimenté par le secteur, c'est-à-dire l'alimentation par un réseau de courant alternatif 220 volts, 50 Hz en général.

A chaque période du signal d'alimentation le triac 21 est conducteur pendant un temps qui est fonction de la vitesse de rotation désirée pour le tambour 10. Cette durée de conduction du triac 21 au cours de chaque période est généralement représentée par un angle de phase ou angle d'allumage du triac 21. Cet angle est égal à $\pi$ radians lorsque le triac est conducteur pendant toute la période.

La commande de l'interrupteur 21 est effectuée par une régulation fonctionnant habituellement en boucle fermée à l'aide d'un microprocesseur 22 et d'une génératrice tachymétrique 23: la valeur réelle de la vitesse du moteur 20, et donc du tambour 10, fournie par la génératrice tachymétrique 23 est comparée, dans le microprocesseur 22, à une valeur de consigne, en mémoire de ce microprocesseur, et le résultat de cette comparaison est un signal d'erreur ε représentant la différence entre la valeur de consigne et la valeur réelle. Ce signal d'erreur ε est transformé en un angle de phase d'allumage θ du triac 21. Au cours de chaque période la durée de conduction de l'interrupteur 21 est d'autant plus importante qu'est grand le signal d'erreur. Ainsi, dans ce fonctionnement en boucle fermée, au démarrage, l'écart entre la vitesse de consigne et la vitesse réelle de rotation du tambour est important et, de ce fait, l'angle de phase de conduction peut également être de très grande valeur.

On met à profit la régulation à microprocesseur 22 et génératrice tachymétrique 23 pour diminuer les risques de détérioration de la machine si celle-ci est mise en marche avec les battants 13 et 14 restés ouverts.

Lors du démarrage du programme d'exécution automatique d'un lavage le microprocesseur 22 fait démarrer le moteur en boucle ouverte, l'angle de phase θ étant augmenté progressivement selon une loi préétablie. De cette manière le tambour 10 commence à tourner lentement et si la porte 13, 14 est ouverte le contact de l'un des battants avec une butée 15, 16 ou avec une arête 17, 18 s'effectue sans choc dommageable pour la machine. Si, au contraire, le démarrage était effectué en boucle fermée la puissance fournie au moteur 20 serait au départ la plus importante ce qui entraînerait une vitesse de rotation élevée, ce qu'évite le démarrage en boucle ouverte avec augmentation progressive de l'angle d'allumage θ à partir de la valeur 0.

Si après un temps prédéterminé de quelques secondes, 2,5 secondes dans l'exemple, la vitesse de rotation du tambour 10, déterminée par la génératrice tachymétrique 23, est inférieure à un seuil $v_0$, par exemple 30 tours par minute, l'alimentation du moteur 20 est interrompue, c'est-à-dire que l'angle de phase θ de commande de l'interrupteur 21 est ramené à 0 et ainsi la machine s'arrête de fonctionner. Cette situation intervient surtout lorsque la porte du tambour est restée ouverte.

Si au bout de la période indiquée ci-dessus, c'est-à-dire 2,5 secondes, la vitesse de rotation du tambour est comprise entre 30 tours et 80 tours par minute, le programme continue normalement, c'est-à-dire que le fonctionnement est alors en boucle fermée.

Si avant l'écoulement des 2,5 secondes la vitesse de rotation du tambour est sensiblement supérieure à celle prévue normalement pour la première phase de fonctionnement du lave-linge, le microprocesseur 22 établit alors le fonctionnement de la régulation en boucle fermée, sans attendre la fin de ladite période de 2,5 secondes. Par exemple si, lors de la première phase de fonctionnement du lave-linge, le tambour doit tourner à une vitesse de l'ordre de 50 tours par minute, au démarrage la vitesse est limitée à 80 tours par minute pour ce tambour, c'est-à-dire que si, avant l'écoulement des 2,5 secondes suivant le démarrage la vitesse atteint 80 tours par minute, la régulation passe immédiatement du fonctionnement en boucle ouverte au fonctionnement en boucle fermée.

De préférence, et comme on va le voir en relation avec les diagrammes des figures 5 à 8, la variation de l'angle de phase avec le temps est fonction de la quantité de linge se trouvant dans le tambour 10.

La figure 5 représente la variation de l'angle de phase θ en fonction du temps t pour de faibles charges de linge dans le tambour. La figure 6 représente la variation de la vitesse V de rotation du tambour (ou du moteur) avec le temps t également pour une faible charge. Les figures 7 et 8 sont des diagrammes correspondant à ceux des figures, respectivement 5 et 6, mais pour des charges importantes de linge dans le tambour.

Au départ, l'angle de phase θ varie linéairement avec le temps t (figures 5 et 7). Cette variation est commandée par le microprocesseur 22. Lorsque la vitesse v de rotation du moteur 20 atteint à l'instant $t_1$ une valeur seuil $v_1$ (figures 6 et 8), par exemple 30 tours par minute, l'angle θ de commande du triac 21 est transformé en un angle θ' tel que:

$$\theta' = \frac{\theta - \theta_1}{2} + \theta \qquad (1)$$

Dans cette formule $\theta_1$ est un angle correspondant à une charge moyenne de linge. Après l'instant $t_1$ l'angle $\theta$ garde la valeur $\theta'$.

Pour une faible charge de linge la vitesse $v_1$ est atteinte rapidement et l'angle $\theta$ est relativement faible pour cette vitesse $v_1$; l'angle $\theta$ est alors plus petit que l'angle $\theta_1$ et ainsi $\theta'$ est plus petit que $\theta$ atteint à l'instant $t_1$ (figure 5). L'angle de phase est ensuite maintenu à la valeur constante $\theta'$ jusqu'à l'écoulement du temps de 2,5 secondes (droite 30 sur la figure 5). Si on ne procédait pas ainsi l'accélération du tambour serait alors trop importante pour une faible charge.

Si au contraire la charge est importante la vitesse $v_1$ est en principe atteinte en un temps $t_1$ (figure 8) relativement important. Au bout de ce temps $t_1$ l'angle de phase $\theta$ est plus grand que $\theta_1$. Il en résulte que $\theta'$ a alors une valeur plus grande que $\theta$ à l'instant $t_1$. Cette nouvelle valeur $\theta'$ est, comme pour les faibles charges, conservée après l'instant $t_1$ (droite 31 sur la figure 7). Si on ne procédait pas à une telle augmentation brusque de l'angle $\theta$ le tambour risquerait de s'arrêter complètement pour une charge importante.

Si lorsque la vitesse $v$ atteint la valeur $v_1$ l'angle $\theta$ est égal à $\theta_1$, cet angle $\theta$ est alors conservé à sa valeur jusqu'à la fin de la période de démarrage de 2,5 secondes.

Le démarrage progressif évite les chocs et permet donc de se passer des butées 15, 16, ce qui réduit le coût de fabrication de la machine. Dans ce cas on fait alors appel au mode de réalisation de la figure 4.

Quel que soit le mode de réalisation (figure 3 ou figure 4) l'invention empêche toute détérioration des battants 13, 14 et des charnières $13_1$, $14_1$.

En résumé l'augmentation progressive de l'angle $\theta$ lors du démarrage présente l'avantage de supprimer les chocs s'exerçant sur le tambour et sur la cuve. L'interruption de l'alimentation du moteur si sa vitesse est inférieure à un seuil prédéterminé au bout du temps de 2,5 secondes limite l'effort qu'exerce alors inutilement le moteur et limite aussi son échauffement.

L'invention s'applique non seulement à une machine pourvue de deux battants mais également à une machine à laver ou sécher le linge à un seul battant de fermeture du tambour ou encore à un tambour à porte à glissière. Bien entendu le temps au bout duquel on passe en fonctionnement en boucle fermée dépend du type de machine utilisé et du type de porte de tambour; par exemple avec une porte à glissière la durée sera relativement plus importante qu'avec une porte à double battant.

## Revendications

1. Machine à laver ou sécher le linge comportant un tambour cylindrique tournant (10) contenant le linge et fermé par une porte (13, 14) solidaire du tambour, ce dernier étant entraîné en rotation par un moteur électrique (20) commandé par un circuit de regulation (21, 22, 23) comparant la vitesse réelle de rotation à la vitesse de consigne, pour corriger la vitesse en fonction de la différence entre ces deux valeurs, et permettant d'augmenter progressivement la vitesse de rotation du moteur (20) pendant une durée prédéterminée, à la mise en route de la machine, caractérisée en ce que la régulation (21, 22, 23) est commandée en boucle ouverte pendant la durée prédéterminée, de l'ordre de quelques secondes, et cette régulation fonctionne en boucle fermée à l'issue de la durée prédéterminée si, à cet instant, la vitesse de rotation du tambour est supérieure à un seuil déterminé ($v_0$), l'alimentation en énergie électrique du moteur d'entraînement du tambour étant interrompue au bout de la durée prédéterminée si, à cet instant, la vitesse de rotation du tambour est inférieure à un seuil déterminé ($v_0$).

2. Machine selon la revendication 1, caractérisée en ce que la durée pendant laquelle la vitesse augmente progressivement est comprise entre 2 et 3 secondes.

3. Machine selon la revendication 2, caractérisée en ce que ladite durée est égale à 2,5 secondes environ.

4. Machine selon l'une quelconque des revendications précédentes, caractérisée en ce que lors du démarrage, pendant ladite durée déterminée, la vitesse de rotation du tambour est maintenue inférieure à une valeur limite (80 tours par minute).

5. Machine selon la revendication 4, caractérisée en ce que la régulation est commandée en boucle fermée dès que la vitesse de rotation du tambour atteint la vitesse limite, même avant la fin de ladite durée prédéterminée.

6. Machine selon l'une quelconque des revendications précédentes, caractérisée en ce que la régulation est du type à commande par angle de phase ($\theta$) et en ce que, lors du fonctionnement en boucle ouverte, l'angle de phase ($\theta$) est commandé pour augmenter progressivement.

7. Machine selon la revendication 6, caractérisée en ce que la variation de l'angle de phase ($\theta$) en fonction du temps (t) est linéaire.

8. Machine selon la revendication 6, caractérisée en ce que l'angle de phase ($\theta$) varie de façon linéaire en fonction du temps (t) tant que la vitesse de rotation du moteur d'entraînement du tambour est inférieure à un seuil ($v_1$), et en ce qu'après que la vitesse ait atteint ce seuil l'angle de phase ($\theta$) reste constant avec une valeur ($\theta'$) telle que:

$$\theta' = \frac{\theta - \theta_1}{2} + \theta$$

formule dans laquelle ($\theta_1$) est une constante.

9. Machine selon l'une quelconque des revendications précédentes, caractérisée en ce que le circuit de commande du moteur comporte un microprocesseur (22).

10. Machine selon l'une quelconque des revendications précédentes, caractérisée en ce que la vitesse réelle de rotation du moteur ou du tambour est mesurée par une génératrice tachymétrique (23).

11. Machine selon l'une quelconque des revendications précédentes, caractérisée en ce que la porte (13, 14) de fermeture du tambour (10) est du type à deux battants.

12. Machine selon la revendication 11, caractérisée en ce qu'étant un lave-linge, la cuve est dépourvue de butée sur sa surface interne pour l'arrêt d'un battant ouvert de porte de tambour.

13. Machine selon l'une quelconque des revendications précédentes, caractérisée en ce que le seuil est de l'ordre de 30 tours par minute

## Claims

1. A washing or drying machine comprising a cylindrical rotating drum (10) containing the clothing of the like to be washed or dried and closed by a door (13 and 14) integral with the drum, the latter being driven to rotate by an electric motor (20) operated by a regulating circuit (21, 22 and 23) comparing the real speed of rotation with the rated speed in order to correct the speed as a function of the difference between these two values and making it possible to gradually increase the speed of rotation of the motor (20) during a predetermined time, for putting the machine into operation, characterized in that the speed of the regulation (21, 22 and 23) is performed in an open loop during the said predetermined time, of the order of a few seconds, and this regulation is performed in a closed loop at the end of the said predetermined time if, at this instant, the speed of rotation of the drum is greater than a determined threshold $(v_0)$, the supply of electrical power to the drive motor being interrupted at the end of the predetermined time if, at this instant, the speed of rotation of the drum is less than a determined threshold $(v_0)$.

2. The machine as claimed in claim 1, characterized in that the time during which the speed increases gradually is comprised between 2 and 3 seconds.

3. The machine as claimed in claim 2, characterized in that the said time is equal to approximately 2.5 seconds.

4. The machine as claimed in any one of the preceding claims, characterized in that at the time of starting up, during the said time, the speed of rotation of the drum is kept below a limit value (80 rpm).

5. The machine as claimed in claim 4, characterized in that the regulation is performed in a closed loop from the time at which the speed of rotation of the drum reaches the limit speed, even prior to the end of the said predetermined time.

6. The machine as claimed in any one of the preceding claims, characterized in that the regulation is of the time involving phase angle $(\theta)$ and in that at the time of operation of the closed loop, the phase angle $(\theta)$ is changed in order to increase gradually.

7. The machine as claimed in claim 6, characterized in that the variation in the phase angle $(\theta)$ as a function of time is linear.

8. The machine as claimed in claim 6, characterized in that the phase angle $(\theta)$ varies in a linear manner as a function of the time $(t)$ as long as the speed of rotation of the drive motor of the drum is less than a threshold $(v_1)$ and in that after the speed has reached this threshold the phase angle $(\theta)$ remains constant with a value $(\theta')$ such that

$$\theta' = (\theta - \theta_1)/2 + \theta$$

in which formula the value $(\theta_1)$ is a constant.

9. The machine as claimed in any one of the preceding claims, characterized in that the operating circuit for the motor comprises a microprocessor (22).

10. The machine as claimed in any one of the preceding claims, characterized in that the real speed of rotation of the motor or of the drum is measured using a tachogenerator (23).

11. The machine as claimed in any one of the preceding claims, characterized in that the door (13 and 14) for the drum (10) is of the type with two leaves.

12. The machine as claimed in claim 11, characterized in that the machine is a washing machine and the vat is free of any abutment on its internal surface for arresting the open leaf of the door of the drum.

13. The machine as claimed in any one of the preceding claims, characterized in that the threshold is of the order of 30 rpm.

## Patentansprüche

1. Maschine zum Waschen oder Trocknen der Wäsche, mit einer zylindrischen Drehtrommel (10), welche die Wäsche enthält und durch eine mit der Trommel fest verbundene Tür (13, 14) verschlossen ist, wobei die Trommel durch einen Elektromotor (20) in Rotation versetzt wird, der durch eine Regelschaltung (21, 22, 23) gesteuert wird, welche die Ist-Drehgeschwindigkeit mit der Sollgeschwindigkeit vergleicht, um die Geschwindigkeit in Abhängigkeit von der Differenz zwischen diesen beiden Werten zu korrigieren, und es ermöglicht, die Drehgeschwindigkeit des Motors (20) während einer vorbestimmten Dauer bei der Inbetriebnahme der Maschine progressiv zu erhöhen, dadurch gekennzeichnet, daß die Regelung (21, 22, 23) während der vorbestimmten Dauer in der Größenordnung von einigen Sekunden in einer offenen Schleife gesteuert ist und diese Regelung in geschlossener Schleife nach Beendigung der vorbestimmten Dauer arbeitet, wenn zu diesem Zeitpunkt die Drehgeschwindigkeit der Trommel eine bestimmte Schwelle $(v_0)$ überschreitet, wobei die Stromversorgung des Motors zum Antreiben der Trommel am Ende der vorbestimmten Dauer unterbrochen wird, wenn zu diesem Zeitpunkt die Drehgeschwindigkeit der Trommel eine bestimmte Schwelle $(v_0)$ unterschreitet.

2. Maschine nach Anspruch 1, dadurch gekennzeichnet, daß die Dauer, während welcher die Geschwindigkeit progressiv erhöht wird, zwischen 2 und 3 Sekunden beträgt.

3. Maschine nach Anspruch 2, dadurch gekennzeichnet, daß die genannte Dauer ca. 2,5 Sekunden entspricht.

4. Maschine nach einem der vorstehenden Ansprüche, dadurch gekennzeichnet, daß bei dem Anlaufen während der genannten bestimmten Dauer die Drehgeschwindigkeit der Trommel unter einem Grenzwert (80 Umdrehungen pro Minute) gehalten ist.

5. Maschine nach Anspruch 4, dadurch gekennzeichnet, daß die Regelung in einer geschlossenen Schleife gesteuert wird, sobald die Drehgeschwindigkeit der Trommel den Grenzwert erreicht, sogar bevor die genannte vorbestimmte Dauer beendet ist.

6. Maschine nach einem der vorstehenden Ansprüche, dadurch gekennzeichnet, daß die Regelung vom Typ mit Steuerung über den Phasenwinkel ($\theta$) ist und daß während der Funktion in geöffneter Schleife der Phasenwinkel ($\theta$) so gesteuert wird, daß er allmählich zunimmt.

7. Maschine nach Anspruch 6, dadurch gekennzeichnet, daß die Veränderung des Phasenwinkels ($\theta$) in Abhängigkeit von der Zeit ($t$) linear ist.

8. Maschine nach Anspruch 6, dadurch gekennzeichnet, daß der Phasenwinkel ($\theta$) in Abhängigkeit von der Zeit ($t$) linear variiert, solange die Drehgeschwindigkeit des Motors zum Antreiben der Trommel kleiner als eine Schwelle ($v_1$) ist, und daß, nachdem die Geschwindigkeit diese Schwelle erreicht hat, der Phasenwinkel ($\theta$) mit einem Wert ($\theta'$) konstant bleibt, so daß

$$\theta' = \frac{\theta - \theta_1}{2} + \theta$$

wobei in dieser Formel ($\theta_1$) eine Konstante ist.

9. Maschine nach einem der vorstehenden Ansprüche, dadurch gekennzeichnet, daß die Schaltung zur Steuerung des Motors einen Mikroprozessor (22) umfaßt.

10. Maschine nach einem der vorstehenden Ansprüche, dadurch gekennzeichnet, daß die reale Drehgeschwindigkeit des Motors oder der Trommel durch einen Tachogenerator (23) gemessen wird.

11. Maschine nach einem der vorstehenden Ansprüche, dadurch gekennzeichnet, daß die Verschlußtür (13, 14) der Trommel (10) vom Typ mit zwei Flügeln ist.

12. Maschine nach Anspruch 11, dadurch gekennzeichnet, daß — da sie eine Waschmaschine ist — die Wanne auf ihrer Innenfläche keinen Anschlag zum Halten eines geöffneten Flügels der Trommeltür aufweist.

13. Maschine nach einem der vorstehenden Ansprüche, dadurch gekennzeichnet, daß die Schwelle in der Größenordnung von 30 Umdrehungen pro Minute liegt.

Fig.1

Fig.2   Fig.3   Fig.4

Fig.5   Fig.7

Fig.6   Fig.8